Europäisches Patentamt

European Patent Office

Office européen des brevets

(19)

(11) Publication number: **0 056 327**
A2

# EUROPEAN PATENT APPLICATION

(21) Application number: 82300127.6

(22) Date of filing: 11.01.82

(51) Int. Cl.³: **F 16 L 13/14**, B 21 D 39/04

(30) Priority: 14.01.81 GB 8101114

(71) Applicant: **FULMER RESEARCH INSTITUTE LIMITED,
Stoke Poges Slough, Buckinghamshire SL2 4QD (GB)**
Applicant: **The Secretary of State for Defence in Her
Britannic Majesty's Government of The United Kingdom
of Great Britain and, Northern Ireland Whitehall, London
SW1A 2HB (GB)**

(43) Date of publication of application: 21.07.82
Bulletin 82/29

(72) Inventor: **Green, Anthony Kenneth, 35 Uxendon
Crescent, Wembley Middx (GB)**
Inventor: **Phillips, Leslie Nathan, 22 Carlyon Close,
Farnborough Hants (GB)**

(74) Representative: **Howden, Christopher Andrew et al,
FORRESTER & BOEHMERT Widenmayerstrasse 4/I,
D-8000 München 22 (DE)**

(84) Designated Contracting States: **DE FR IT NL SE**

(54) **A pipe connector.**

(57) In making a connection between a pipe 1 and an outer
sleeve 3 the sleeve 3 is mounted telescopically on the pipe
and is crimped to the pipe by means of crimps 4. To ensure
that a seal is provided the exterior of the pipe may be coated
with a polymer film or with a layer of anaerobic adhesive
before being inserted into the sleeve 3. Such connections
may be used to interconnect two pipes or to connect associ-
ated components such as taps, T-junctions and valves to
such pipes.

1

TITLE: "A Pipe Connector"

THE PRESENT INVENTION relates to a pipe connector and more particularly the present invention relates to a connection between two tubular members formed with such a pipe connector.

In this specification the term "pipe connector" is used to mean an item that can be connected to a pipe, and which may be formed integrally with an item to be connected to the pipe, such as a tap, or with a connector to be attached to another pipe. The term "connection" is used to mean a device which connects together two pipes.

It is often necessary to connect tubular members such as pipes together. Thus there is often a requirement to be able to provide a connection which connects pipes of substantially the same outer diameter, but it is to be appreciated that there is also a need to provide connectors to connect components such as taps, valves, "T" junctions and the like to pipes.

Many prior proposals have been made concerning the interconnection of pipes and concerning the connecting of components to pipes, but the present invention seeks to provide a connector which can be very cheaply and easily constructed, and which can, if desired, be constructed to be able to withstand substantial pressures and substantial temperatures.

It is to be noted that there is a specific requirement for connectors that can be utilised to repair hydraulic pipe lines in aircraft, or marine vessels, that have been damaged. Particularly with regard to the repair of damaged aircraft it is desirable to be able to repair damaged hydraulic pipe lines swiftly and efficiently to enable a damaged aircraft to be restored to an air-worthy condition.
Thus the present invention seeks to provide a connector,
and more particularly a connector which can be utilised
to form a connection when repairing damaged hydraulic pipe
lines, but the invention is not limited to this particular
application. Thus, for example, the invention can also be
applied to domestic and industrial pipe lines for water,
compressed air, gas and vacuum when repairing or attaching
components to such pipe lines.

The present invention also provides a tool for use in
making a connector in accordance with the invention.

According to one aspect of this invention there is
provided a connector . connected to a pipe member, said
connector comprising a tubular sleeve member, one of said
members having an inner diameter slightly greater than the
outer diameter of the other said member, the one said member
being inserted into one end of the other said member, the
other said member being crimped so that it is brought into
firm engagement with the one member substantially around
the entire periphery of the one member. Advantageously
said one member is an outer sleeve and said other member
is said pipe.

Preferably said crimping is performed in such a way
that the said one member is plastically deformed, and conveniently two substantially parallel zones of crimping are
provided.

Advantageously an additional means may be provided to
constitute a seal between said pipe member and said sleeve
member, and such sealing means may comprise an anaerobic
adhesive, which may be toughened with an elastomeric compound, plumber's white, or a polymeric film, said film
comprising polyethylene film, a fluorocarbon film, fluoro-
ethylene propylene film, polytetrafluoroethylene film, polyether-
sulphone film, polyether ether ketone film, or a polysulphone
film, although said film may also comprise a self-adhesive
cellulosic tape. Said one member may be crimped onto said
other member by means of crimping plates which present arcuate crimping surfaces to the one member. The crimping may be preferred by two crimping plates opposed at 180° to each other, by three crimping plates opposed at 120° to each other or by four crimping plates opposed at 90° to each other.

Preferably said arcuate surfaces have a radius equal to the radius of the said other member plus the thickness of the wall of the said one member the arcuate surfaces each being less than a semi-circle.

The invention also relates to a connection joining together two pipes, said connection comprising a sleeve, the sleeve and each pipe being engaged to comprise a connector as described above.

Said two pipes may be substantially butted, or may be spaced apart.

According to another aspect of this invention there is provided a tool for use in forming a connector according to said one aspect of the invention said tool comprising means for supporting at least two opposed crimping members each presenting an arcuate crimping surface, and means for moving said crimping plates relative to one another so that said arcuate crimping surfaces are urged towards one another. Said moving means may comprise a hydraulic ram, a pneumatic ram or a mechanical or electromechanical device.

Advantageously the tool may comprise a main support block on which said moving means is mounted, one of said crimping member being mounted on said moving means, and a secondary support block mounted in a predetermined position relative to said main support block by means of a spacer, the second crimping member being mounted on said secondary support block.

Said secondary block may be demountable, and preferably said secondary block is pivotally mounted to enable the tool readily to be moved into and out of a position in which the tool embraces a pipe.

Advantageously said crimping members comprise crimping plates, and may comprise two crimping plates opposed at 180°, three crimping plates opposed at 120° or four crimping plates opposed at 90°.

This invention also relates to a kit of parts for making a connector, for effecting repairs to pipes or for constructing pipework, said parts comprising a pipe, a sleeve and a tool as described above. The kit may further comprise cutting and abrasive tools, cleaning fluids, and various crimping plates for use with pipes and sleeves of different diameters, and sealing means.

In order that the invention may be more readily understood, and so that further features thereof may be appreciated, the invention will now be described by way of example with reference to the accompanying drawings in which:

Figure 1 is a perspective view of two pipes joined by a connection in accordance with the invention;

Figure 2 is an axial vertical sectional view taken through the connection of Figure 1;

Figure 3 is a figure illustrating the arrangement of crimping blades for use in a crimping tool for forming a connector in accordance with the invention;

Figure 4 is a diagrammatic view showing the crimping blades surrounding an inner pipe and an outer sleeve to form a connector in accordance with the invention;

Figure 5 is a diagrammatic perspective view of a crimping tool incorporating the blades shown in Figure 4;

Figure 6 is a perspective view showing one way of repairing a pipe which has a portion thereof damaged; and

Figure 7 is a perspective view corresponding to Figure 6 showing an alternative way of repairing the pipe.

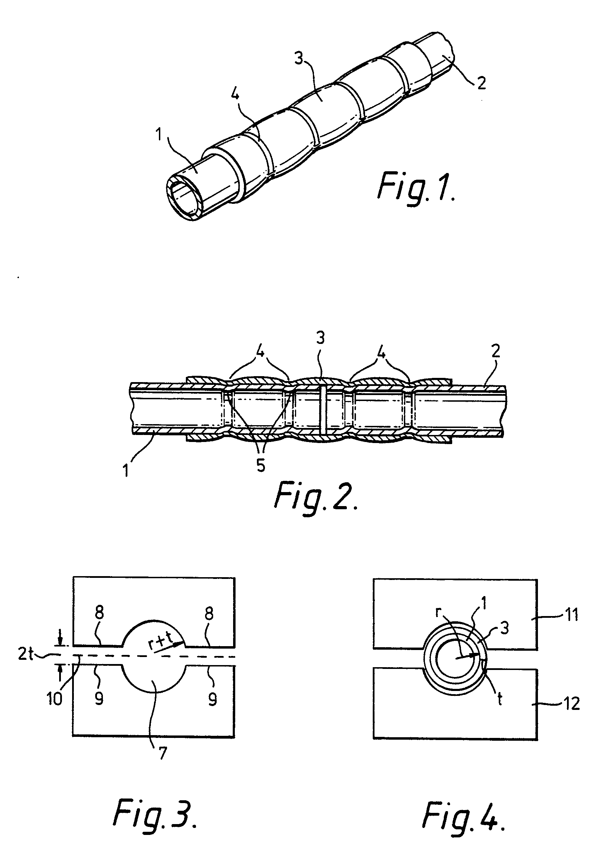

Referring to Figure 1 two portions 1, 2 of hydraulic pipe which may be made of stainless steel, mild steel, light alloy, an appropriate copper alloy, or the material sold under the Registered Trade Mark "NIMONIC", are joined together by an outer sleeve 3 which engages each pipe portion 1, 2 to form a connection in accordance with the invention. Each end of the outer sleeve 3 is crimped to a respective end of a pipe 1 or 2, and thus each end of the sleeve 3 forms a connector that can withstand high pressures. The construction of the connection will now be described in greater detail with reference to Figure 2.

The pipes to be joined 1, 2 have substantially the same external diameter. The sleeve 3 has an internal diameter which is slightly greater than the external diameter of the pipes 1, 2. In constructing the connection as shown in Figure 1 initially the two pipe sections to be joined are, if necessary, cut to the appropriate length and the ends of the pipe sections are de-burred. The ends of the pipe sections may be cleaned with a solvent, but this is not essential. The sleeve 3, is telescoped on to one of the pipes 1, 2 and the pipes are then substantially abutted against one another. The adjacent ends of the pipes may then, if desired, have a polymeric film, such as a film of polyethylene, polyethersulphone (PES), polyether ether ketone (PEEK), polysulphone (PS) or polytetrafluorothylene (PTFE) or any other fluorocarbon such as fluoroethylene propylene(FEP) or a film formed by self adhesive cellulosic tape wound around the adjacent abutted ends of the pipes 1, 2. Alternatively, the exterior surfaces of the adjacent ends of the pipes 2, 3 may be coated with plumber's white or with an anaerobic adhesive. An anaerobic adhesive is an adhesive that cures or sets in the absence of oxygen and thus, whilst such an adhesive is exposed to the atmosphere, the adhesive does not set. The preferred adhesive is an adhesive which is toughened with an elastomeric compound, such as the adhesive sold under the designation "LOCTITE 638". The sleeve 3 may then be moved along so that it embraces substantially symmetrically the ends of both the pipes 1, 2. The outer sleeve 3 is then crimped so that portions 4 thereof are brought into firm contact with the inner pipes 1, 2, the crimping being effected with a tool that presents arcuate surfaces to engage the outer surface of the sleeve 3, the arrangement being such that the outer sleeve 3 is brought into contact with each of the inner pipes 1, 2, over an entire circumference of the inner pipe 1, 2. The crimping is performed with such a pressure that the inner pipes 1, 2 are plastically deformed 5. Thus there is a firm mechanical key between the outer sleeve 3 and the inner pipes 1, 2. Whilst, if appropriate arcuate shaped crimping surfaces (which will be described hereinafter) are used the crimped bond between the outer sleeve 3 and the inner pipes 1, 2 may form an effective seal, the polymeric film, the plumber's white or the anaerobic adhesive is preferably provided to ensure that an effective seal is formed. It will be appreciated that once the sleeve 3 has been crimped to the pipes 1, 2 the portions of the anaerobic adhesive that are trapped between the inner pipes 1, 2 and the outer sleeve 3 will cure and set to form a seal. The remaining anaerobic adhesive will not set, and thus will not block the interconnecte pipes 1, 2, but instead will be swept from the connection between pipes.

It will be noted, from Figure 2, that it is preferred to provide two zones of crimping 4, between the outer sleeve 3 and each pipe 1, 2 and thus the illustrated connector has four zones of crimping in all. More zones of crimping may be provided if desired in certain circumstances.

It has been found that a connector constructed as described above may withstand hydraulic fluid having a pressure of $6.89 \times 10^7$ Pa (10,000 psi) at a temperature of $100^\circ$C.

It will be appreciated that it is preferred to utilise an appropriate tool to perform the crimping process. The crimping tool incorporates at least two opposed crimping plates which present arcuate crimping surfaces. Figure 3 illustrates a flat plate 6, of for example, steel, used to form such crimping plates. The plate is drilled to have a central aperture 7 having a radius $r + t$. The plate is then cut along two parallel lines 8, 9, the lines being spaced apart by a distance $2t$ and being equispaced on either side of and parallel with a diameter 10 of the circle formed in the plate. Thus two plates 11, 12 are formed which have the configuration illustrated in Figure 4. The plates may be utilised to crimp an outer sleeve 3 having a wall thickness of $t$ onto an inner pipe 1 having a radius $r$. It will be appreciated that when a pipe 1 and sleeve 3 are located between the described crimping plates 11, 12, the crimping plates being aligned in a single plane, if the crimping plates are urged towards one another the outer sleeve 3 will be deformed until portions of the inner periphery of the outer sleeve 3 are brought into contact with the entire periphery of inner pipe 1 and then the inner pipe 1 will be slightly plastically deformed.

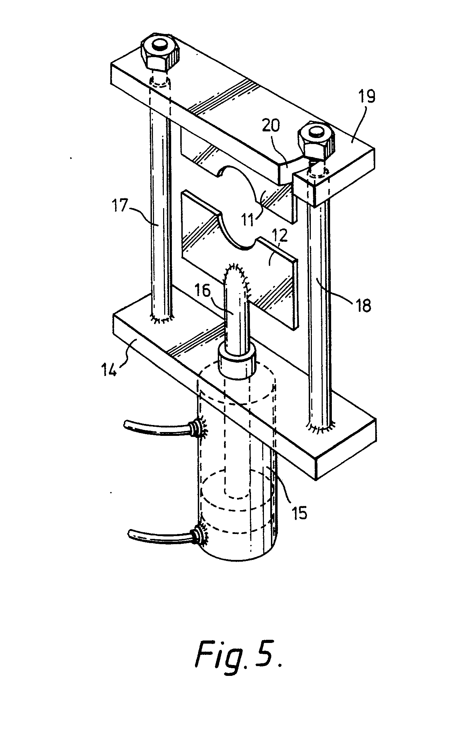

Figure 5 illustrates a crimping tool utilising plates 11, 12 as shown in Figure 4. The crimping tool 13 comprises a main support block 14. The support block is connected to a hydraulic ram 15, and the piston rod 16 of the hydraulic ram is connected to one of the crimping plates 12 described above, so that the crimping plate 12 is movable in response to actuation of the hydraulic ram 15. Mounted, by means of appropriate spacer bolts 17, 18 at a distance from the main support block 14 is a secondary support block 19 which fixedly supports the other of the crimping plates 11, so that the two crimping plates 11, 12 are directed towards one another and lie in a single plane. The secondary support block 19 may be pivotally mounted on one of the spacer bolts 17, the other spacer bolt 18 being located in a notch 20 in the block 19 so that the block 19 can be swung from the assembled position illustrated in Figure 5 about the spacer bolt 17 to enable the crimping plates readily to be located to embrace part of the connector to be assembled and so that the tool can readily be removed from the connector when the connector has been assembled. If desired the nut or the spacer bolt 17 may be removable to enable the separate block 19 to be removed from the rest of the tool. This facilitates to use of the tool in cramped spaces.

It will be appreciated that in forming a connection the components of the connection are assembled as described above and the crimping tool illustrated in Figure 5 is then located in position, the crimping tool then being actuated to crimp the outer sleeve to the inner pipes to form the connection. The ram may be operated in any convenient way. If an aircraft is being repaired there is usually a source of high pressure hydraulic fluid available. However, in other cases it may be appropriate to use a hand or foot operated pump to provide the high pressure hydraulic fluid. The hydraulic ram may be substituted by a pneumatic ram, or any suitable mechanical or electromechanical device which will produce the desired relative movement of the crimping plates.

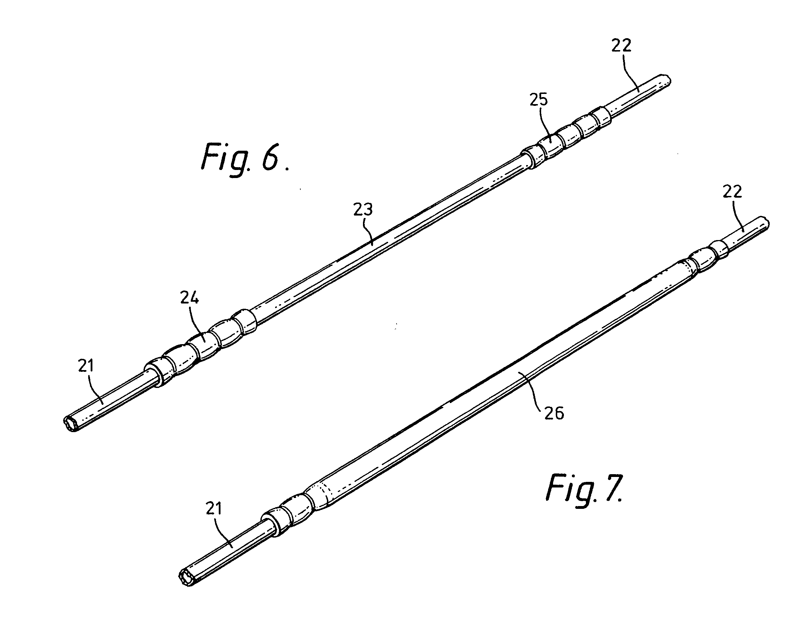

Referring now to Figure 6 when a portion of a pipe is to be replaced, for example if the pipe forms part of the hydraulic system of an aircraft, and part of the pipe has been damaged, then initially the damaged part of the pipe may be cut away, leaving two pipe portions 21, 22 which are located a substantial distance apart which are to be connected. The two pipe portions 21, 11 may be joined by providing a further pipe portion 23 of the same external diameter as the damaged pipe of sufficient length to span the gap between two undamaged pipe portions 21, 22 that are to be connected. Two connections 24, 25 each as described above may then be utilised to connect this fresh pipe portion in position.

However, as shown in Figure 7 it is equally possible to connect two spaced undamaged pipe portions 21,22 by using an elongate sleeve 26 of greater diameter than the undamaged pipe portions 21, 22, this elongate sleeve being crimped, at either end, to the two undamaged pipe portions, each end of the elongate sleeve thus comprising a connector in accordance with the invention.

Whilst the invention has been described primarily with reference to the use of connections in accordance with the invention for repairing damaged hydraulic pipe lines it is to be appreciated that connectors in accordance with the invention may be rapidly and cheaply constructed and thus it is envisaged that connectors in accordance with the invention may advantageously be used in the construction or repair of domestic or industrial plumbing, service or central heating systems, or may be used in the initial construction of any pipe work assembly that involves the use of connections, such as the hydraulic systems of motor vehicles, earth moving equipment, industrial machinery or mining equipment, or in marine pipework.

It is also to be appreciated that components which are to be connected to pipe work, such as taps, valves, or "T" junctions, or the like may be provided with a protruding outer tubular sleeve dimensioned as described above to accommodate a standard size pipe within the sleeve, and thus the component can be connected to the appropriate pipe by merely inserting the pipe in the protruding sleeve (having provided the end region of the pipe with a coating of plumber's white anaerobic adhesive or polymeric film, or other seal forming substance) and then performing a crimping operation.

Whilst the crimping tool has been described as being provided with one pair of blades it is to be appreciated that the tool may have two parallel pairs of blades to enable the described pairs of crimping zones to be formed simultaneously. If for example the tool is to be used solely in the construction of connectors shown in Figures 1 and 2 the tool may have four pairs of blades.

Whilst the invention has been described with reference to embodiments in which the sleeve is an outer sleeve which embraces one or more pipes, the invention also relates to connectors and connections in which there is an inner sleeve which is inserted into a pipe, the pipe being crimped onto the inner sleeve.

CLAIMS:

1. A connector connected to a pipe member, said connector comprising a tubular sleeve member, one of said members having an inner diameter slightly greater than the outer diameter of the other said member, the one said member being inserted into one end of the other said member, the other said member being crimped so that it is brought into firm engagement with the one member substantially around the entire periphery of the one member.

2. A connector according to Claim 1 wherein said one member is an outer sleeve and said other member is said pipe.

3. A connector according to any one of the preceding claims wherein two substantially parallel zones of crimping are provided.

4. A connector according to any one of the preceding claims wherein additional means are provided to constitute a seal between said pipe member and said sleeve member.

5. A connector according to Claim 4 wherein said sealing means comprise a simple anaerobic adhesive, an anaerobic adhesive toughened with an elastomeric compound, or a polymeric film.

6. A connector according to any one of the preceeding claims wherein said one member is crimped onto said other member by means of crimping plates which present arcuate crimping surfaces to the one member.

7. A connector according to Claim 6 wherein said arcuate surfaces have a radius equal to the radius of the said other member plus the thickness of the wall of the said one member, the arcuate surfaces each being less
than a semi-circle.

8.    A connection joining together two pipes, said connection comprising a sleeve, the sleeve and each pipe
being engaged to comprise a connector according to any
one of Claims 1 to 7.

9.    A tool for use in forming a connector according to
any of Claims 1 to 7, said tool comprising means for
supporting at least two opposed crimping members each
presenting an arcuate crimping surface, and means for
moving said crimping plates relative to one another so
that said arcuate crimping surfaces are urged towards one
another.

10.   A tool according to Claim 9 comprising a main
support block on which said moving means is mounted, one
of said crimping members being mounted on said moving
means, and a secondary support block mounted in a predetermined position relative to said main support block
by means of a spacer, the second crimping member being
mounted on said secondary support block.

11.   A tool according to Claim 10 wherein said secondary
block is pivotally mounted to enable the tool readily
to be moved into and out of a position in which the tool
embraces a pipe.

12.   A kit of parts for making a connector, said parts
comprising a pipe, a sleeve, a tool according to any one
of Claims 9, 10 or 11, and means to form a seal between
the pipe and the sleeve.

0056327

1/3

Fig.1.

Fig.2.

Fig.3.

Fig.4.

Fig. 5.

Fig. 6.

Fig. 7.